# EUROPÄISCHE PATENTSCHRIFT

(11) **EP 2 751 434 B1**
(45) Veröffentlichungstag und Bekanntmachung des Hinweises auf die Patenterteilung: **08.04.2015**
(21) Anmeldenummer: 12732791.4
(22) Anmeldetag: 29.06.2012
(51) Int. Cl.: F16B 45/00, A62B 35/00, F16B 19/10

(54) **SICHERUNGSÖSE UND SICHERUNGSSYSTEM**
SECURING EYE AND SECURING SYSTEM
OEILLET DE SÉCURITÉ ET SYSTÈME DE SÉCURISATION

(30) Priorität: 31.08.2011 DE 202011105177 U
(43) Veröffentlichungstag der Anmeldung: 09.07.2014
(73) Patentinhaber: Skylotec GmbH, 56567 Neuwied (DE)
(72) Erfinder: RINKLAKE, Kai, 56567 Neuwied (DE)
(74) Vertreter: Zeitler - Volpert - Kandlbinder
(86) Internationale Anmeldenummer: PCT/EP2012/002741
(87) Internationale Veröffentlichungsnummer: WO 2013/029709

(56) Entgegenhaltungen:
- DE-B- 1 213 584
- DE-C1- 3 822 690
- FR-A1- 2 766 145
- GB-A- 237 355
- GB-A- 1 170 001
- US-A- 3 371 951
- US-A- 3 845 527
- US-A- 6 068 226

## Beschreibung

Die Erfindung betrifft eine Sicherungsöse zur Ausbildung eines lösbaren Anschlagpunkts sowie ein eine solche Sicherungsöse umfassendes Sicherungssystem. Abnehmbare Anschlagpunkte kommen dort zum Einsatz, wo Personen in größerer Höhe gesichert arbeiten müssen, z.B. beim Putzen von Fensteraußenseiten bei großen Gebäuden. Ein als abnehmbarer Anschlagpunkt bezeichnetes Sicherungssystem kann dabei mehrere Verankerungselemente umfassen, die in verschiedenen Positionen in der Gebäudeaußenwand fest verankert sind und der lösbaren Aufnahme einer Sicherungsöse dienen, die von der zu sichernden Person bedarfsweise in dem jeweiligen Verankerungselement eingesetzt wird. Die Person kann sich dann mittels beispielsweise eines Karabinerhakens an dieser Sicherungsöse sichern. Der wesentliche Vorteil eines abnehmbaren gegenüber einem fest installierten Anschlagpunkt, bei dem die Sicherungsöse dauerhaft in der Gebäudewand fixiert ist, liegt in der optischen Unauffälligkeit.

Das Dokument FR 1 507 574 A zeigt die Merkmale des Oberbegriffes von Anspruch 1.

Ein Sicherungssystem zur Ausbildung eines abnehmbaren Anschlagpunkts ist beispielsweise aus der EP 0 379 282 B1 bekannt. Dieses Sicherungssystem besteht aus einer fest in z.B. einer Gebäudewand zu verankernden Buchse sowie einer Sicherungsöse, die einen Bolzen aufweist, der für das Einstecken in die Buchse vorgesehen ist. An den Bolzen schließt sich ein Sicherungsring an, der der Aufnahme des Karabinerhakens dient. Bolzen und Sicherungsring sind dabei fest mit einander verbunden bzw. einteilig ausgeführt. Diese Ausführung ist mit dem Nachteil verbunden, dass die Sicherungsöse in definierter Ausrichtung in die Buchse gesteckt werden muss und sich während des Gebrauchs auch nicht verdrehen sollte, da eine Belastung des Sicherungsring nicht in jeder Richtung zulässig ist.

Um diesen Nachteil auszuräumen, wurden entsprechende Sicherungssysteme entwickelt, bei denen der Sicherungsring um eine Achse, die quer zur Längsachse des Bolzens liegt, verschwenkbar mit dem Bolzen verbunden ist. Der zusätzliche Freiheitsgrad des Sicherungsrings sorgt dafür, dass dieser fast immer in der zulässigen Richtung belastet wird. Die Verschwenkbarkeit des Sicherungsrings wird konstruktiv dadurch erreicht, dass dieser mit einer Lagerachse verbunden ist, die drehbar in einer Querbohrung des Bolzens gelagert ist. Daraus ergibt sich eine Verschwenkbarkeit um einen Verschwenkwinkelbereich, der mehr als 180° beträgt und insbesondere nur durch ein Anschlagen des Sicherungsrings an dem Bolzen selbst bzw. der angrenzenden Wand begrenzt ist.

Als Problem hat sich dabei jedoch gezeigt, dass infolge der Verschwenkbarkeit des Sicherungsrings ein daran befestigter Karabinerhaken regelmäßig Kontakt mit der Gebäudewand hat, wodurch diese beschädigt oder verschmutzt werden kann.

Ausgehend von diesem Stand der Technik lag der Erfindung die Aufgabe zugrunde, ein verbessertes gattungsgemäßes Sicherungssystem anzugeben. Insbesondere sollte durch das verbesserte Sicherungssystem eine Beschädigung oder Verschmutzung einer Gebäudewand durch einen an einer Sicherungsöse des Sicherungssystems befestigten Karabinerhaken weitgehend vermieden werden.

Diese Aufgabe wird durch eine Sicherungsöse gemäß dem unabhängigen Patentanspruch 1 sowie durch ein Sicherungssystem gemäß dem nebengeordneten Patentanspruch 7 gelöst. Vorteilhafte Ausführungsformen der erfindungsgemäßen Sicherungsöse sind Gegenstand der abhängigen Patentansprüche und ergeben sich aus der nachfolgenden Beschreibung der Erfindung.

Der Erfindung liegt der Gedanke zugrunde, dass bei einem Sicherungssystem, dessen Sicherungsöse mit einem Bolzen und einem dazu verschwenkbar gelagerten Sicherungsring ausgebildet ist, die Gefahr einer Beschädigung bzw. Verschmutzung einer Gebäudewand durch einen Kontakt mit einem an dem Sicherungsring angeschlagenen Karabinerhaken wirkungsvoll und auf einfache Weise dadurch verhindert werden kann, dass der Schwenkwinkelbereich des Sicherungsrings auf weniger als 180° (und insbesondere weniger als ± 90° um die koaxiale Ausrichtung des Sicherungsrings bezüglich des Bolzens) begrenzt ist. Auf diese Weise können die Vorteile eines verschwenkbar an dem Bolzen gelagerten Sicherungsrings einer Sicherungsöse, nämlich die Sicherstellung einer stets richtigen Belastung des Sicherungsrings, mit dem Vorteil einer unbeweglichen Ausbildung der Sicherungsöse, nämlich der verringerten Gefahr einer Beschädigung oder Verschmutzung einer Gebäudewand, kombiniert werden.

Dabei ist vorgesehen, dass der Schwenkwinkelbereich des Rings auf einen Bereich von 120° bis 90° (erfindungsgemäß zwischen ± 60° und ± 45° um die koaxiale Ausrichtung des Sicherungsrings bezüglich des Bolzens) begrenzt ist. Der Schwenkwinkelbereich der erfindungsgemäßen Sicherungsöse wird erfindungsgemäß durch einen oder zwei (in den zwei Bewegungsrichtungen begrenzenden) Anschläge begrenzt.

Vorzugsweise ist dabei vorgesehen, dass die Anschläge derart ausgebildet sind, dass diese bei einer erhöhten Belastung des Sicherungsrings die Begrenzung des Schwenkwinkelbereichs freigeben. Demnach kann vorgesehen sein, dass die Anschläge lediglich dann den Schwenkwinkelbereich erfindungsgemäß begrenzen, wenn die auf den Sicherungsring ausgeübte und mit einer Kraftkomponente auf einen der Anschläge wirkende Zugbelastung vergleichsweise gering ist (z.B. maximal 100 N, 200N, 300 N, 400 N oder 500 N) und den Schwenkwinkelbereich freigibt (d.h. nicht mehr begrenzt), sofern die Zugbelastung und dementsprechend auch die Belastung des entsprechenden Anschlags durch den Sicherungsring diesen Grenzwert überschreitet. Im Einsatzfall der Sicherungsöse, d.h. bei einem Absturz einer daran gesicherten Person, wodurch die Sicherungsöse zumindest mit dem Körpergewicht der gesicherten Person belastet wird, gibt der jeweilige Anschlag somit den Schwenkwinkelbereich frei, wodurch dann vorteilhafterweise der gesamte (beispielsweise lediglich durch einen Anschlag des Sicherungsrings an der Gebäudewand begrenzte) Schwenkwinkelbereich freigegeben wird.

In einer bevorzugten Ausführungsform der erfindungsgemäßen Sicherungsöse kann der Bolzen sowie der Sicherungsring vorzugsweise (weitgehend) aus Metall und insbesondere aus Stahl ausgebildet sein, während die den Schwenkwinkelbereich begrenzenden Anschläge aus Kunststoff ausgebildet sein können. Dadurch können die die tatsächliche Sicherungsfunktion übernehmenden Bauteile aus hochfestem Stahl gefertigt werden, während der lediglich einem Schutz der Gebäudewandung dienenden Anschläge kostengünstig aus Kunststoff gefertigt werden können.

Weiterhin kann bei einer Ausbildung der Anschläge aus Kunststoff in diese auf einfache Weise eine Sollbruchstelle integriert werden, wie dies in einer bevorzugten Ausführungsform der erfindungsgemäßen Sicherungsöse vorgesehen. An dieser Sollbruchstelle kann der jeweilige Anschlag bei der Belastung durch den Sicherungsring im Einsatzfall definiert abbrechen.

Um die erfindungsgemäße Sicherungsöse auch nach einem Einsatzfall und einem abgebrochenen Anschlag voll funktionsfähig weiterverwenden zu können, ist vorzugsweise vorgesehen, dass die Anschläge auswechselbar mit dem Bolzen oder dem Sicherungsring verbunden sind.

Die Erfindung betrifft weiterhin ein Sicherungssystem mit einer erfindungsgemäßen Sicherungsöse sowie einer Sicherungsbuchse, die für eine Verankerung in einer Wand vorgesehen ist und in die der Bolzen der Sicherungsöse (insbesondere verriegelbar) einsteckbar ist.

Die Erfindung wird nachfolgend anhand eines in den Zeichnungen dargestellten Ausführungsbeispiels näher erläutert. In den Zeichnungen zeigt:
- Fig. 1:: eine erfindungsgemäße Sicherungsöse in einer isometrischen Ansicht;
- Fig. 2:: die Sicherungsöse gemäß Fig. 1 in einer Seitenansicht;
- Fig. 3:: die Sicherungsöse gemäß Fig. 1 in einer Vorderansicht;
- Fig. 4:: eine Sicherungsbuchse zur Verwendung mit der Sicherungsöse gemäß den Fig. 1 bis 3; und
- Fig. 5:: ein aus der Sicherungsöse gemäß den Fig. 1 bis 3 und der Sicherungsbuchse gemäß Fig. 4 bestehendes Sicherungssystem in einer teilweise geschnittenen, isometrischen Ansicht.

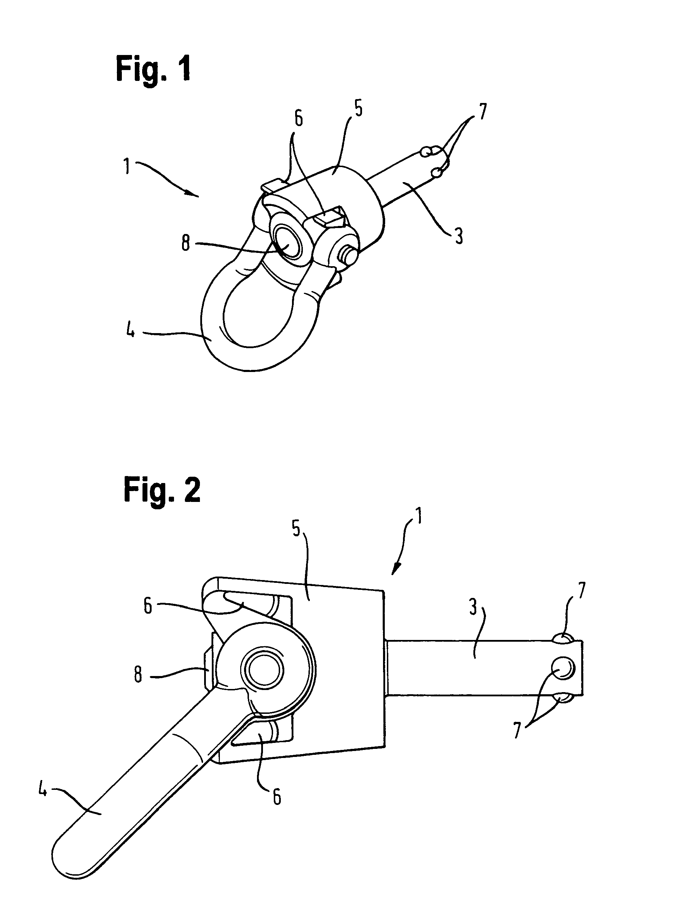

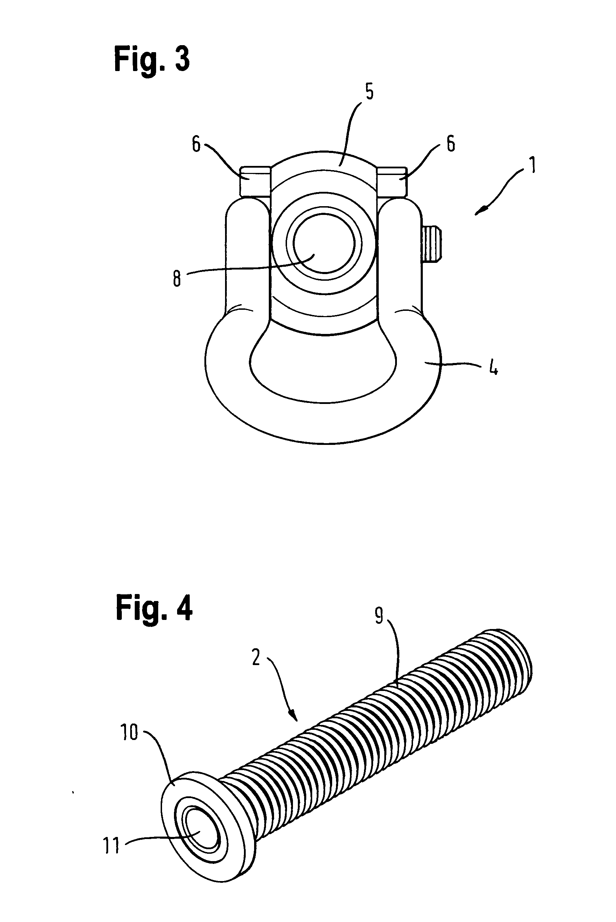

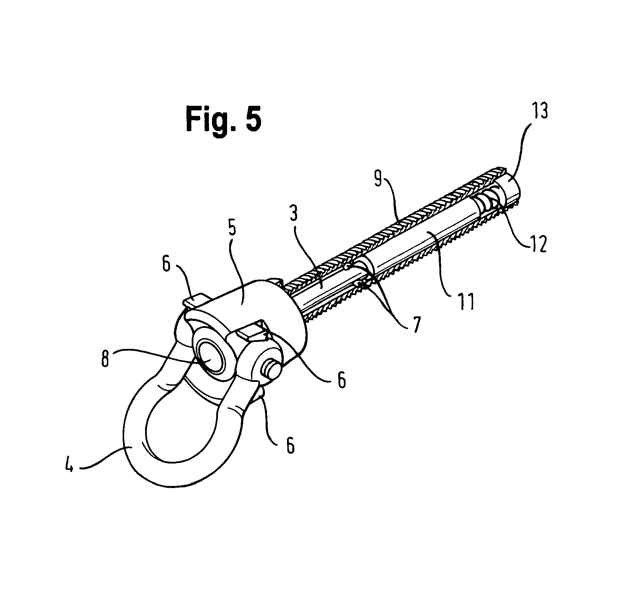

Die Fig. 1 bis 5 zeigen eine Ausführungsform eines erfindungsgemäßen Sicherungssystems (vgl. Fig. 5), das eine Sicherungsöse 1 (vgl. Fig. 1 bis 3) sowie eine Sicherungsbuchse 2 (vgl. Fig. 4) umfasst.

Die Sicherungsöse 1 umfasst einen Grundkörper aus Stahl, der einen Bolzen 3 mit glattflächigem Mantel ausbildet, der für ein Einstecken in die in der Fig. 4 dargestellte Sicherungsbuchse 2 vorgesehen ist. An dem nicht für das Einstecken in die Sicherungsbuchse 2 vorgesehen Ende des Grundkörpers ist dieser drehbar mit einem Sicherungsring 4 versehen. Der Sicherungsring 4 ist dabei um eine Achse, die senkrecht zu der Längsachse des Bolzens 3 liegt, verschwenkbar. Der Verschwenkwinkelbereich des Sicherungsrings 4 wird durch einen Anschlagring 5 aus Kunststoff begrenzt, der auswechselbar auf dem Grundkörper befestigt ist und vier abstehende Anschlagelemente 6 umfasst, die den Schwenkbereich auf ± 45° um eine koaxiale Ausrichtung des Sicherungsrings 4, d.h. eine Ausrichtung bei der die Längsachse des Bolzens 3 innerhalb einer von dem Sicherungsring 4 ausgebildeten Ebene liegt, begrenzt.

Der Bolzen 3 der Sicherungsöse 1 ist an seinem steckseitigen Ende mit insgesamt vier kugelförmigen Verriegelungselementen 7 versehen. Diese sind beweglich innerhalb von Mantelöffnungen des Bolzens 3 gelagert und werden durch ein innerhalb des Bolzens (in dessen längsaxialer Richtung) beweglich geführten Verriegelungsbolzen (nicht dargestellt) in der in den Fig. 1, 2 und 5 dargestellten Verriegelungsstellung gehalten. In der Verriegelungsstellung überragen die Verriegelungselemente 7 die Mantelfläche des Bolzens 3 und greifen bei einer in die Sicherungsbuchse 2 eingesetzten Sicherungsöse 1 in entsprechende Vertiefungen in der Innenseite der Sicherungsbuchse 2 ein. Dadurch ist die Sicherungsöse 1 gegen ein ungewolltes Lösen aus der Sicherungsbuchse 2 gesichert. Der Verriegelungsbolzen ist durch ein ebenfalls innerhalb des Grundkörpers der Sicherungsöse angeordnetes Federelement (nicht dargestellt) beaufschlagt, wodurch dieser in einer die Verriegelungsstellung der Verriegelungselemente 7 bewirkenden Position gehalten wird.

Zum Einsetzen des Bolzens 3 der Sicherungsöse 1 in die und zum Lösen aus der Aufnahme der Sicherungsbuchse 2 ist es erforderlich, die Verriegelungselemente 7 so weit in das Innere des Bolzens 3 zu verschieben, dass diese dessen Manteloberfläche im Wesentlichen nicht mehr überragen. Dies erfolgt durch ein Eindrücken eines mit dem Verriegelungsbolzen verbundenen Betätigungselements 8, wodurch der Verriegelungsbolzen eine definierte Distanz (in längsaxialer Richtung) innerhalb des Bolzens verschoben wird. Dabei wird ein Abschnitt des Verriegelungsbolzens, in dem dieser einen verkleinerten Außendurchmesser aufweist, in den Kontakt mit den Verriegelungselementen 7 gebracht wird, so dass diese in das Innere des Bolzens 7 ausweichen können. Da der Verriegelungsbolzen in die Verriegelungsstellung federbelastet ist, bewegt sich dieser nach dem Freigeben des Betätigungselements 8 selbsttätig wieder in die in den Fig. 1, 2 und 5 dargestellte Verriegelungsstellung.

Die Sicherungsbuchse 2 ist für eine dauerhafte Fixierung in einer Wand (nicht dargestellt), beispielsweise einer Gebäudewand, vorgesehen. Diese umfasst eine Gewindehülse 9 mit einem Außengewinde sowie einen an einem Ende des Grundkörpers 9 befestigten Anlagering 10, der die Einschubtiefe der Gewindehülse 9 in eine Bohrung in der Wand begrenzt und zudem als Drehlager für die in die Sicherungsbuchse 2 eingesteckte Sicherungsöse 1 dient. Die Sicherungsbuchse 2 umfasst weiterhin eine hülsenförmige Verschlusskappe 11, über die das Innere des Grundkörpers 9 auch dann gegenüber der Umgebung verschlossen ist, wenn keine Sicherungsöse 1 eingesteckt ist. Die Verschlusskappe 11 ist über eine (zylindrische Schrauben-)Feder 12 in die in der Fig. 4 dargestellte Position belastet, in der diese die von dem Anlagering 10 ausgebildete Aufnahmeöffnung verschließt. Dazu erstreckt sich die Feder 12 mit Ihrer einen Seite in die hülsenförmige Verschlusskappe 11 und stützt sich mit ihrer anderen Seite an einem Verschlusselement 13 ab, das das dem Anlagering 10 gegenüberliegende Ende der Gewindehülse 9 verschließt. Beim Einsetzen des Bolzens 3 der Sicherungsöse 1 wird die Verschlusskappe 11 durch den Bolzen 3 in Richtung des Verschlusselements 13 und gegen die Kraft der Feder 12 verschoben.

Die Feder 12 hat nicht nur die Aufgabe, die Verschlusskappe 11 bei einer nicht eingesetzten Sicherungsöse 1 in Richtung der Verschlussstellung gemäß der Fig. 4 zu verschieben, sondern diese unterstützt zudem ein Lösen der Sicherungsöse 1 aus der Sicherungsbuchse 2, sobald die Verriegelungselemente 7 durch eine Betätigung des Betätigungselements 8 gelöst werden.

Das Außengewinde auf der Gewindehülse 9 dient der sicheren Fixierung der Sicherungsbuchse 2 in der Wand. Dabei ist entweder vorgesehen, die Sicherungsbuchse über die gesamte Länge der Gewindehülse 9 in einer Bohrung in der Wand zu fixieren oder, sofern die Stärke der Wand geringer als die Länge der Gewindehülse 9 ist, die Sicherungsbuchse 2 durch das Aufschrauben einer Sicherungsmutter (nicht dargestellt) auf das dem Anlagering gegenüberliegende Ende der Gewindehülse 9 zu sichern.

## Patentansprüche

1. Sicherungsöse (1) mit einem Bolzen (3) und einem verschwenkbar mit dem Bolzen verbundenen Sicherungsring (4), **dadurch gekennzeichnet, dass** der Schwenkwinkelbereich des Sicherungsrings (4) durch einen oder zwei Anschläge , insbesondere durch einen oder zwei Anschläge jeweils in den beiden Bewegungsrichtungen, begrenzt ist auf einen Bereich zwischen 90°, der zwischen +45° und -45° um eine Ausrichtung liegt, bei der die Längsachse des Bolzens (3) innerhalb einer von dem Sicherungsring (4) ausgebildeten Ebene liegt, und 120°, der zwischen +60° und 60° um eine Ausrichtung liegt, bei der die Längsachse des Bolzens (3) innerhalb einer von dem Sicherungsring (4) ausgebildeten Ebene liegt.

2. Sicherungsöse (1) gemäß Anspruch 1, **dadurch gekennzeichnet, dass** die Anschläge derart ausgebildet sind, dass diese bei einer erhöhten Belastung des Sicherungsrings (4) die Begrenzung des Schwenkwinkelbereichs freigeben.

3. Sicherungsöse (1) gemäß einem der vorhergehenden Ansprüche, **dadurch gekennzeichnet, dass** der Bolzen (3) und der Sicherungsring (4) aus Metall und die Anschläge aus Kunststoff ausgebildet sind.

4. Sicherungsöse (1) gemäß Anspruch 2 oder 3, **dadurch gekennzeichnet, dass** die Anschläge eine Sollbruchstelle aufweisen.

5. Sicherungsöse gemäß einem der Ansprüche 2 bis 4, **dadurch gekennzeichnet, dass** die Anschläge auswechselbar sind.

6. Sicherungssystem mit einer Sicherungsöse (1) gemäß einem der vorhergehenden Ansprüche und einer Sicherungsbuchse (2), in die der Bolzen (3) der Sicherungsöse (1) einsteckbar ist.

## Claims

1. Securing lug (1) having a bolt (3) and a securing ring (4) which is pivotably connected to the bolt, **characterised in that** the pivoting angle range of the securing ring (4) is limited, in both directions of movement, by one or two limit stops, in particular by one or two limit stops, to a range between 90°, which between +45° and -45° lies around an alignment in which the longitudinal axis of the bolt (3) lies within a plane defined by the securing ring (4), and 120°, which between +60° and -60° lies around an alignment in which the longitudinal axis of the bolt (3)lies within a plane defined by the securing ring (4).

2. Securing lug (1) according to claim 1, **characterised in that** the limit stops are so designed that if an increased load is applied to the securing ring (4) they release the limitation of the pivoting angle range.

3. Securing lug (1) according to one of the preceding claims, **characterised in that** the bolt (3) and the securing ring (4) are made of metal and the limit stops are made of plastic.

4. Securing lug (1) according to claim 2 or 3, **characterised in that** the limit stops have a predetermined breaking point.

5. Securing lug according to one of the claims 2 to 4, **characterised in that** the limit stops are replaceable.

6. Securing system with a securing lug (1) according to one of the preceding claims and a securing socket (2) into which the bolt (3) of the securing lug (1) can be plugged.

## Revendications

1. Oeillet de fixation (1) avec un goujon (3) et un anneau de fixation (4) relié de manière pivotante avec le goujon, **caractérisé en ce que** la zone angulaire de pivotement de l'anneau de fixation (4) est limitée, par une ou deux butées, plus particulièrement par une ou deux butées dans les deux directions de mouvement, à une zone entre 90°, qui se trouve entre +45° et -45° autour d'une orientation dans laquelle l'axe longitudinal du goujon (3) se trouve à l'intérieur d'un plan formé par l'anneau de fixation (4), et 120°, qui se trouve entre +60° et -60° autour d'une orientation dans laquelle l'axe longitudinal du goujon (3) se trouve à l'intérieur d'un plan formé par l'anneau de fixation (4).

2. Oeillet de fixation (1) selon la revendication 1, **caractérisé en ce que** les butées sont conçus de façon à ce qu'elles libèrent, lors d'une sollicitation accrue de l'anneau de fixation (4), la limitation de la zone angulaire de pivotement.

3. Oeillet de fixation (1) selon l'une des revendications précédentes, **caractérisé en ce que** le goujon (3) et l'anneau de fixation (4) sont fabriqués en métal et les butées en matière plastique.

4. Oeillet de fixation (1) selon la revendication 2 ou 3, **caractérisé en ce que** les butées présentent une zone de rupture.

5. Oeillet de fixation (1) selon l'une des revendications 2 à 4, **caractérisé en ce que** les butées peuvent être remplacées.

6. Système fixation avec un oeillet de fixation (1) selon l'une des revendications précédentes et une douille de fixation (2) dans laquelle le goujon (3) de l'oeillet de fixation (1) peut être inséré.
